(19) Europäisches Patentamt
European Patent Office
Office européen des brevets

(11) **EP 2 087 542 B1**

(12) **EUROPEAN PATENT SPECIFICATION**

(45) Date of publication and mention
of the grant of the patent:
**22.01.2014 Bulletin 2014/04**

(51) Int Cl.:
*H01M 8/02* *(2006.01)*   *H01M 8/24* *(2006.01)*
*H01M 8/04* *(2006.01)*

(21) Application number: **07746666.2**

(22) Date of filing: **23.05.2007**

(86) International application number:
**PCT/KR2007/002518**

(87) International publication number:
**WO 2008/082036 (10.07.2008 Gazette 2008/28)**

(54) **FUEL CELL STACK AND OPERATING METHOD FOR CATALYST CLEANING THEREOF**

BRENNSTOFFZELLENSTAPEL UND BETRIEBSVERFAHREN ZUR KATALYSATORREINIGUNG DAFÜR

EMPILEMENT DE PILES À COMBUSTIBLE ET PROCÉDÉ DE FONCTIONNEMENT DESTINÉ AU NETTOYAGE CATALYSE DE CELUI-CI

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **28.11.2006 KR 20060118310**

(43) Date of publication of application:
**12.08.2009 Bulletin 2009/33**

(73) Proprietor: **Fuelcell Power Inc.**
**Seongnam-city Gyeonggi-do 463-816 (KR)**

(72) Inventors:
• **YU, Do-Hwan**
**Suwon-si**
**Gyeonggi-do 442-152 (KR)**
• **KIM, Ho-Suk**
**Seoul 143-821 (KR)**
• **HONG, Byung-Sun**
**Seongnam-city**
**Gyeonggi-do 463-816 (KR)**
• **SHINN, Mee-Nam**
**Yongin-city**
**Gyeonggi-do 449-821 (KR)**

(74) Representative: **Jacobson, Claude**
**Cabinet Lavoix**
**2, Place d'Estienne d'Orves**
**75441 Paris Cedex 09 (FR)**

(56) References cited:
EP-A2- 1 416 561    WO-A1-2008/035175
WO-A2-2006/077461    JP-A- 2005 026 239
KR-A- 20010 007 489    KR-B1- 100 646 543
US-A1- 2003 134 172    US-B1- 6 551 731

EP 2 087 542 B1

**Description**

[Technical Field]

The present invention relates to a fuel cell stack generating electric power using an electrochemical reaction between hydrogen and oxygen. More particularly, the present invention relates to a fuel cell stack and a catalyst regeneration method of the fuel cell stack, which can, when the fuel cell stack is deteriorated in power generation efficiency and endurance as unit cells of the fuel cell stack operate for a long period, restore the performance of the fuel cell stack through a catalyst regeneration operation.

[Background Art]

A proton exchange membrane fuel cell (PEMFC) uses a proton exchange membrane having a hydrogen ion exchange property as an electrolyte membrane. The PEMFC includes a membrane-electrode assembly having the proton exchange membrane and a pair of electrodes that are formed on opposite surfaces of the proton exchange membrane, and separation plates. Particularly, the PEMFC generates electricity and heat through an electrochemical reaction between a fuel gas containing hydrogen and an oxidizing gas containing oxygen. The PEMFC has an excellent output property, a low operational temperature, and a quick start capability as compared with other fuel cells. Therefore, the PEMFC has been widely used in various applications such as a portable power source for electronic devices, an automotive power source, and a home cogeneration plant, and a distribution power source for buildings.
The PEMFC includes a unit cell having a membrane-electrode assembly and separation plates. A fuel cell stack includes a plurality of unit cells. Since an electromotive force of each of the unit cells is generally less than 1V, the unit cells are stacked with one another in series. End plates are disposed on outer surfaces of the outermost unit cells of the fuel cell stack and interconnected. At this point, in order to improve electrical contact performance between the unit cells, the unit cells and the end plates are fastened with uniform pressure by a fastener such as a tie-rod or a band.
The fuel cell stack may be deteriorated in power generation efficiency and endurance thereof due to a long electrochemical reaction period. That is, the fuel cell stack is deteriorated in its electric power generation performance when carbon monoxide is adhered to a fuel side electrolyte membrane, platinum catalyst impurities are adsorbed in an air side electrolyte membrane, or the performance of a gas diffusion layer for discharging water that is a by-product of the electrochemical reaction is deteriorated.
To solve the problem, the prior art fuel cell stack is designed to use the following method. That is, in the prior art fuel cell stack, a method for applying a voltage of 0.6-0.8V from an external power source to the unit cells in a state where the fuel cell stack stops generating the electric power, a method for substituting oxygen by supplying water, an inertial gas, or a hydrocarbon gas, or a method for supplying a reduction agent has been used. However, the method for preventing the deterioration of the electric power generation performance of the fuel cell stack cannot be practically applied or cannot sufficiently prevent the deterioration of the electric power generation performance.
In addition, in the prior art fuel cell stack, a voltage of each of the unit cells is measured to determine if the fuel cell stack is in a normal state. That is, a voltage generated from the membrane-electrode assembly is detected by a method in which a voltage detecting pin contacts the fuel cell through a hole formed in the separation plate of the unit cell or a method in which a high conductive material or foaming resin is inserted in the hole formed in the separation plate of the unit cell. However, when using the voltage detecting method, the voltage value varies in accordance with humidity generated by the electrochemical reaction, an ambient temperature, and generation of vibration, and thus the detection reliability is deteriorated.

[Disclosure]

[Technical Problem]

Exemplary embodiments of the present invention provide a fuel cell stack and a catalyst regeneration method of the fuel cell stack, which can, when the fuel cell stack is deteriorated in power generation efficiency and endurance as unit cells of the fuel cell stack operate for a long period, restore the performance of the fuel cell stack through a catalyst regeneration operation.
Exemplary embodiments of the present invention also provide a fuel cell stack that can more accurately detect a voltage of each of the unit cells without being affected by external conditions such as humidity generated during the electrochemical reaction, an ambient temperature, and an external impact.

[Technical Solution]

The above problems are solved by a fuel cell stack according to claim 1.

The fuel cell stack may further include a fixing frame that is disposed in a longitudinal direction in which the unit cells are arranged and is fixed to the end plates. The voltage detecting pins may be supported on the fixing frame.

Each of the voltage detecting pins may include a spring that is disposed in the voltage detecting pin and provides an elastic force in a longitudinal direction of the voltage detecting pin, and an end tip that is biased by the spring to contact the unit cell. The end tip may be provided with a plurality of pointed probes contacting the unit cell.

The voltage detecting circuit may further include a photo coupler that is connected together with the reference shunt regulators between the resistors to transmit a signal by detecting if the reference shunt regulators conduct the electricity.

The cell voltage monitoring board may further include a catalyst regeneration circuit that performs catalyst regeneration of the unit cells of a power unit, which is a minimum unit for generating electric power and is formed by a group of four adjacent unit cells, by selectively cutting off flow of a current generated in the power unit. The catalyst regeneration circuit may include two resistors that are interconnected in series between the power units, reference shunt regulators that are connected to the resistors in parallel and selectively conduct electricity in accordance with a voltage value between them, and a transistor to which a load resistor is connected in parallel and which selectively cuts off the current flowing toward the load resistor.

The catalytic regeneration circuit may further include a photo coupler that is connected together with the reference shunt regulators between the resistors to transmit a signal to an external side.

In another exemplary embodiment, a catalyst regeneration method of the fuel cell stack includes stopping operation of a load operating by electric power generated by the unit cells, stopping supply of a fuel gas and air to the unit cells, performing catalyst regeneration of the unit cells using the catalyst regeneration circuit, detecting a voltage of each of the unit cells, and stopping the catalyst regeneration when the detected cell voltage is equal to or less than a preset voltage value or continuing the catalyst regeneration when the detected cell voltage is greater than a preset voltage value.

In still another exemplary embodiment, a catalyst regeneration method of the fuel cell stack includes converting consumption power of a power generation load operating by stack power generated from the unit cells into system power to reduce the power generation load of the unit cells, reducing amounts of fuel gas and air that are supplied to the unit cells, performing catalyst regeneration of the unit cells using the catalyst regeneration circuit, recovering a power generation overload by linearly increasing the power generation load until the stack voltage measured from the unit cells is maintained to be equal to or higher than a preset value, and converting the consumption power of the power generation load from the system power to the stack power after stopping the catalyst regeneration.

[Advantageous Effects]

When the fuel cell stack is deteriorated in power generation efficiency and endurance as the unit cells of the fuel cell stack operate for a long period, the performance of the fuel cell stack can be restored by performing the catalyst regeneration operation.

In addition, according to the present invention, since the contact of the voltage detecting pin with the corresponding unit cell can be reliably realized, the voltages of the unit cells can be more accurately detected without being affected by external conditions such as humidity generated during the electrochemical reaction, an ambient temperature, and an external impact.

[Description of Drawings]

FIG. 1 is a schematic diagram of a fuel cell stack that can be catalyst-regenerated according to an exemplary embodiment of the present invention.

FIG. 2 is a partial sectional view of the fuel cell stack of FIG. 1, illustrating a structure for detecting a cell voltage.

FIG. 3 is a circuit diagram of a voltage detecting circuit for detecting a voltage of each cell of the fuel cell stack of FIG. 1.

FIG. 4 is a circuit diagram of a catalyst regeneration circuit for the catalyst regeneration of fuel cells of the fuel cell stack of FIG. 1.

FIG. 5 is a flowchart illustrating a catalyst regeneration method when the fuel cell stack of FIG. 1 is not generating electricity.

FIG. 6 is a flowchart illustrating a catalyst regeneration method when the fuel cell stack of FIG. 1 is generating electricity.

※ Description of Reference Numerals Indicating Primary Elements in the Drawings ※

| 100: | Fuel Cell Stack | 110: | Cell |
|---|---|---|---|
| 120: | End Plate | 130: | Fixing Frame |
| 140: | Voltage Detecting Pin Circuit Board | 150: | Catalyst Regeneration |

[Best Mode]

The present invention will be described more fully hereinafter with reference to the accompanying drawings, in which exemplary embodiments of the invention are shown.

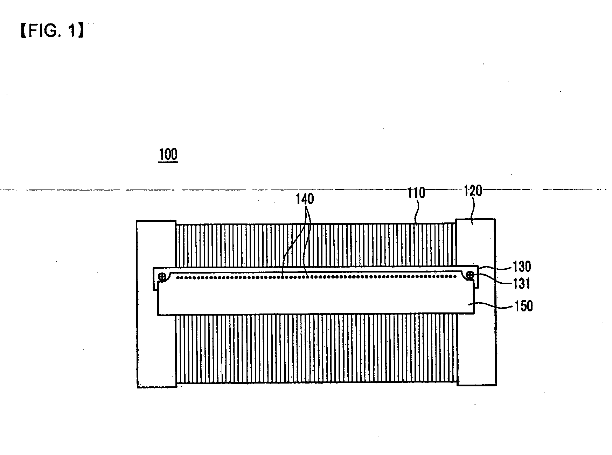

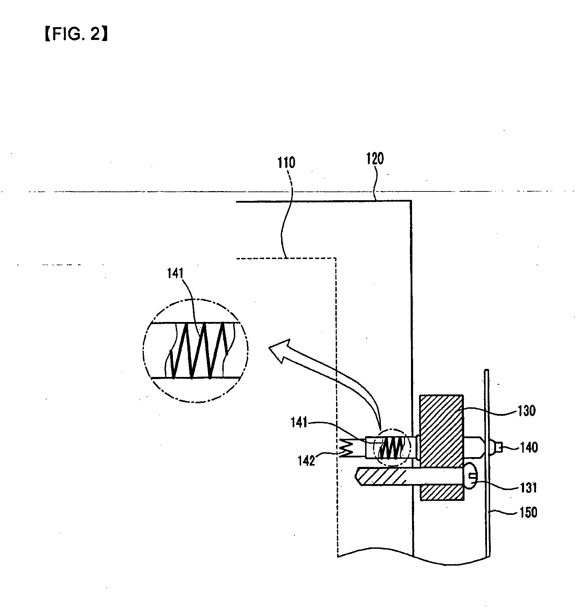

FIG. 1 is a schematic diagram of a fuel cell stack that can be catalyst-regenerated according to an exemplary embodiment of the present invention, and FIG. 2 is a partial sectional view of the fuel cell stack of FIG. 1, illustrating a structure for detecting a cell voltage.

As shown in FIGS. 1 and 2, a fuel cell stack 100 of the present exemplary embodiment includes a plurality of unit cells 110 generating a current through an electrochemical reaction. Each of the unit cells 110 is a proton exchange membrane fuel cell (PEMFC) that uses a proton exchange membrane having a hydrogen ion exchange property as an electrolyte membrane. Each unit cell 110 includes a membrane-electrode assembly  having a pair of electrodes that are formed on opposite surfaces of the proton exchange membrane, and separation plates disposed at both sides of the membrane-electrode assembly. Then, the unit cells 110 generate the current by electrochemically reacting a fuel gas containing hydrogen with an oxidizing gas containing oxygen. Since an electromotive force of each of the unit cells 110 is generally less than 1V, the unit cells 110 are stacked with one another in series.

End plates 120 are disposed on outer surfaces of the outermost unit cells 110. At this point, in order to improve an electrical contact performance between the unit cells 110, the unit cells 110 and the end plates 120 are fastened with uniform pressure by a fastener such as a tie-rod or a band.

The fuel cell stack 100 further includes a fixing frame 130 disposed along a longitudinal side along which the unit cells 110 are arranged. The fixing frame 130 interconnects the end plates 120. The fixing frame 130 is formed in a bar shape having a predetermined length. The fixing frame 130 supports a plurality of voltage detecting pins 140 and a cell voltage monitoring board 150, which will be described later. The fixing frame 130 does not directly contact the unit cells 110 but is spaced apart from them by a predetermined distance. Opposite ends of the fixing frame 130 are coupled to the respective end plates 120.

The voltage detecting pins 140 are supported by the fixing frame 130 and contact the respective unit cells 110 to detect the voltages of the respective unit cells 110. The voltage detecting pins 140 are shown in FIG. 2  in more detail. Each of the voltage detecting pins 140 includes a spring 141 providing an elastic force in a longitudinal direction and a tip 142 that is biased to contact the corresponding unit cell 110 by the spring 141. The tip 142 of the voltage detecting pin 140 has a plurality of pointed probes. In a fuel cell stack of the prior art, the voltage is inaccurately detected due to humidity variation, contact-resistance increase, and thermal-resistance increase that are caused by the electrochemical reaction. However, in the present exemplary embodiment, since the tip 142 of the voltage detecting pin 140 is biased by the spring 141, the tip 142 can more securely contact the corresponding unit cell 110 even when an external impact is applied. Furthermore, the tip 142 of the voltage detecting pin 140 has the plurality of pointed probes. The pointed probes are slightly pressed into the corresponding unit cell 110, thereby enhancing the contact of the voltage detecting pin 140 with the corresponding unit cell 110. Therefore, in the present exemplary embodiment, the voltages of the unit cells 110 can be more accurately detected without being affected by external conditions.

The cell voltage monitoring board 150 is connected to the voltage detecting pins 140 to induce the catalyst regeneration by controlling a load and a voltage of each unit cell 110 in accordance with the voltage of the unit cell 110. Therefore, a voltage detecting circuit and a catalyst regeneration circuit are mounted on a substrate of the cell voltage monitoring board 150.

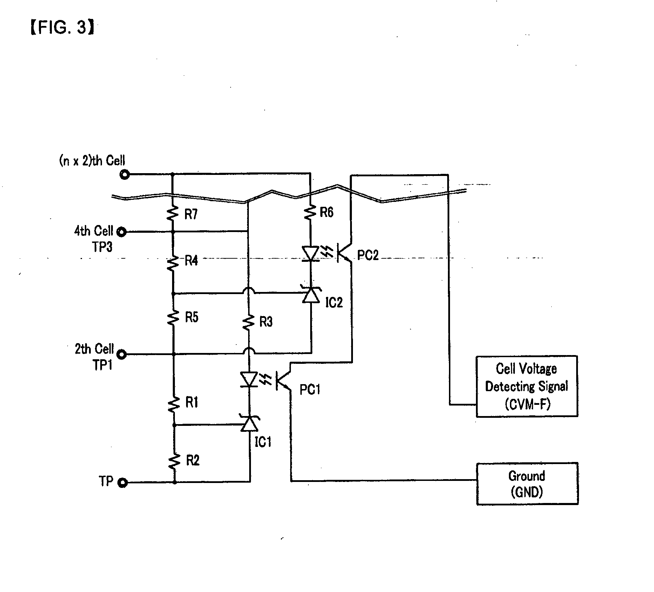

FIG. 3 is a circuit diagram of a voltage detecting circuit for detecting a voltage of each cell of the fuel cell stack of FIG. 1.

Referring to FIGS. 2 and 3, the voltage detecting circuit detects abnormal unit cells 110 that have deteriorated power generation performance among the unit cells 110 by receiving the voltage information from the voltage detecting pins 140 connected to the respective unit cells 110.

That is, the voltage detecting circuit includes two resistors R that are interconnected in series between a pair of unit cells TP, reference shunt regulators IC that are connected to the resistors R in parallel and selectively conduct electricity in accordance with a voltage value between them, and a photo coupler PC that is connected together with the reference shunt regulators IC between the resistors R to transmit a signal by detecting if the reference shunt regulators conduct the electricity. Further, in the voltage detecting circuit, the basic constituent elements are additionally connected in series between each pair of unit cells TP and drawn out through a cell voltage detecting line transmitting an external signal and a ground line. The voltage detecting circuit detects an abnormal unit cell TP region according to the following principle.

That is, in the present exemplary embodiment, the reference shunt regulators IC have an operational voltage of 0.9V and can detect even a relatively much lower voltage of 0.696V. A maximum voltage of the unit cell TP is 0.8-1V in no-load power generation, and is 0.7-0.8V in rated load power generation. Therefore, the voltage detecting circuit generates 1.4-2.0V with reference to the pair of unit cells TP and detects the voltages using branch voltages of the resistors R1 and R2 in accordance with the operation of the reference shunt regulators IC. At this point, in the normal operation, the voltage detecting circuit has a condition where R1=1.2kΩ, R2=10kΩ, and Vref (of the IC)=0.696V. The voltage Vref of the reference shunt regulators IC can be obtained according to the following Equation 1.

【Equation 1】

$$Vref = \{ R2 / (R1+R2) \} \times \{ Voltage(V) \text{ between } TP\text{-}TP1 \}$$

Therefore, the voltage Vref is as follows:

$$Vref = \{ 10k\Omega / (1.2k\Omega+10k\Omega) \} \times (1.4V\text{-}2.0V) = 1.25V\text{-}1.79V$$

Accordingly, since a voltage value of the voltage detecting circuit has an electric potential higher than the preset voltage Vref (0.696V) of the reference shunt regulators IC, an anode and a cathode of each of the reference shunt regulators IC are electrically conducted with each other. Then, in the photo coupler PC, a diode side operates and emits light. In the photo coupler PC, a transistor side that is a receiving terminal receives light, thereby realizing electrical conduction.

The above-described structure of the voltage detecting circuit is identically applied to each pair of unit cells TP in series. Then, if there is no cut-off phenomenon in the series circuit connection of the photo couplers PC, the voltage detecting circuit determines that the cell voltage detection is being normally realized.

On the other hand, in an abnormal operation, even when the voltage detecting circuit has the identical conditions where R1=1.2kΩ, R2=10kΩ, and Vref=0.696V, the result varies in accordance with a voltage value between abnormal unit cells TP-TP1. The voltage Vref of the reference shunt regulators IC can be calculated by the following Equation 2.

【Equation 2 】

$$Vref = \{ 10k\Omega / (1.2k\Omega+10k\Omega) \} \times (0V\text{-}0.78V) = 0V\text{-}0.696V \, .$$

Accordingly, since a voltage value of the voltage detecting circuit has an electric potential lower than the preset voltage Vref (0.696V) of the reference shunt regulators IC, an anode and a cathode of each of the reference shunt regulators IC are not electrically conducted with each other. Therefore, there is a cut-off phenomenon in the series circuit connection of the photo coupler PC, and thus it is determined that the stack is in an abnormal state. As a result, when a voltage of the unit cell TP is equal to or less than 0.39V(0.78V/2), it is estimated that the signal is abnormal.

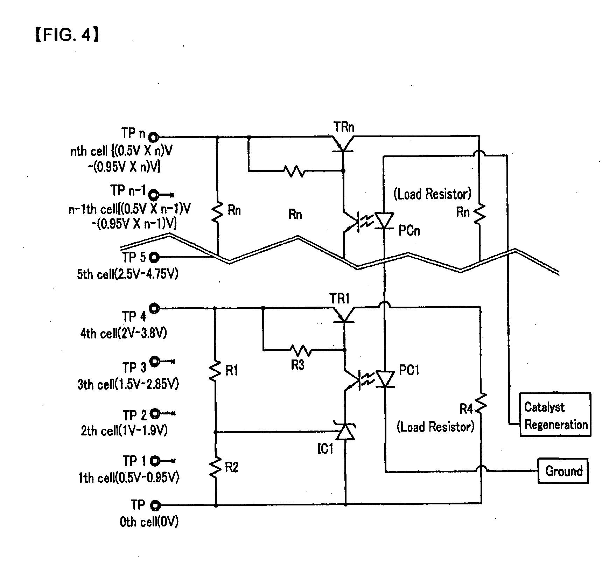

FIG. 4 is a circuit diagram of a catalyst regeneration circuit for the catalyst regeneration of fuel cells of the fuel cell stack of FIG. 1.

As shown in FIGS. 2 and FIG. 4, a catalyst regeneration circuit is designed such that four adjacent unit cells are grouped as a power unit that is a minimum unit for generating power using the unit cells. The current flow generated from the power unit is selectively cut off so that the unit cells of the power unit are controlled to be catalyst-regenerated.

That is, the catalyst regeneration circuit includes two resistors R that are interconnected in series between the power units, reference shunt regulators IC that are connected to the resistors R in parallel and selectively conduct electricity in accordance with a voltage value between them, a photo coupler PC that is connected together with the reference shunt regulators IC between the resistors R to transmit a signal to an external side, and a transistor TR to which a load resistor is connected in parallel and which selectively interrupts the current flowing toward the load resistor. In addition, in the catalyst regeneration circuit, basic constituent elements are additionally connected in series to every group of the four unit cells TP so that a circuit is finally completed through a catalyst regeneration signal line to which a signal is transmitted from the external side and a group line.

The power unit has at least the following voltage range to operate the transistor TR, the photo coupler PC, and the reference shunt regulators IC, excepting the resistors.

【Equation 3 】

$$Vbe(Sat.V) \text{ of } TR1 + Vce(Sat.V) \text{ of } PC + Vka \text{ between Anode-Cathode of IC}$$

$$= 0.85V(Vbe \text{ of } TR1) + 0.2V(Vce \text{ of } PC) + 0.9V(Vka \text{ of } IC) = 1.95V$$

That is, the power unit has a voltage of about 2.0V, higher than 1.95V for the catalyst regeneration control. Since a stable operational voltage condition in the catalyst regeneration operation is 0.5V, four or more unit cells TP (e.g., 0.5V X 4 cells=2.0V) are grouped.

When a catalyst regeneration signal is input, the catalyst regeneration circuits are simultaneously operated at the power units that are interconnected in series. In a normal operation, each of the power units operates within a voltage range of 2.6V (0.65V X 4 cells, a minimum voltage in power generation) to 3.8V (0.95V X 4 cells, a maximum voltage in no-load operation). In the power unit, the catalyst regeneration control is started as the photo coupler PC conducts electricity by an external signal (i.e., current transmitted from the photo diode) input to the photo coupler PC.

Then, in the power unit, the potential states of the four unit cells (2.6-3.8V) are detected as voltages are branched off from the resistors R1 (2kΩ) and R2 (1.07kΩ). The voltage (Vref) of the reference shunt regulators IC is 0.696V. The voltage Vref of the reference shunt regulators IC can be obtained according to the following Equation 4.

【Equation 4 】

$$Vref = \{ R2 / (R1 + R2) \} \times 4\text{-cell voltage}$$

$$= \{ 1.07k\Omega / (2.0k\Omega + 1.07k\Omega) \} \times 4\text{-cell voltage} = 0.348k\Omega \times 4\text{-cell voltage}$$

When inversely operating the above,

$$\text{The 4-cell voltage becomes } Vref / \{ R2 / (R1 + R2) \}$$

$$= 0.696V / \{ 1.07k\Omega / (2.0k\Omega + 1.07k\Omega) \} = 2.0 \text{ V}.$$

First, in the catalyst regeneration circuit, when the power unit satisfies a condition of "4-cell voltage ≥ 2.0V", the reference shunt regulator IC and the transistor TR are conducted with each other, and thus the current generated from the group of four unit cells TP flows toward the load resistor R4.

At this point, the load resistor R4 is set to be equal to or less than a maximum current that can flow in the transistor TR and not damage the transistor TR even when the circuit operates during the power generation. That is, a maximum current capacity that can flow in the transistor R is 20V/5A and a maximum voltage of the group of four unit cells TP is 3.8V (0.95V X 4-cell, a maximum voltage in a no-load operation). Therefore, the load resistor R4 is limited to be equal to or less than 1/2 of the maximum current of the transistor TR to obtain a current margin and to be equal to or less than 2.5A when the maximum voltage of the group of four unit cells TP is 3.8V. Therefore, the load resistor R4 can be calculated according to the following Equation 5.

【Equation 5】

$$\text{Load resistor R4} = \text{maximum voltage V of four cells/maximum value I}$$

$$\text{of current that can flow to TR1}$$

$$R4 = 3.8V / 2.5A = 1.52\,\Omega$$

Therefore, the load resistor R4 may be set to be equal to or greater than 1.52 Ω to protect the transistor TR.

Second, in the catalyst regeneration circuit, when the power unit satisfies the condition of "4-cell voltage < 2.0V", the current flow in the reference shunt regulator IC and the transistor TR is cut off, and thus the current generated in the group of four unit cells TP cannot flow to the load resistor R4. Therefore, the cell voltage of the unit cells in the power unit of the corresponding region increases.

Third, the catalyst regeneration circuit is set such that the reference shunt regulator IC repeats the first and second operations with reference to "Vref=07696V". By repeating the above-described operations, the catalyst regeneration circuit is controlled such that the voltage of the group of four unit cells TP is maintained at 2.0V and a voltage of each of the unit cells TP is maintained at a constant voltage of 0.5V.

At this point, in order to protect the circuit, when the current is greater than the maximum current set in the load resistor (e.g., when the current supplied from the group of four unit cells is greater than a limited value or when amounts of the hydrogen and oxygen injected in the stack are sufficient), the cell voltage is recovered by the limitation of the load resistor.

The above-described catalyst regeneration operation may be performed during when the fuel cell stack 100 is generating or is not generating electricity. The following will describe the catalyst regeneration method of the fuel cell stack 100.

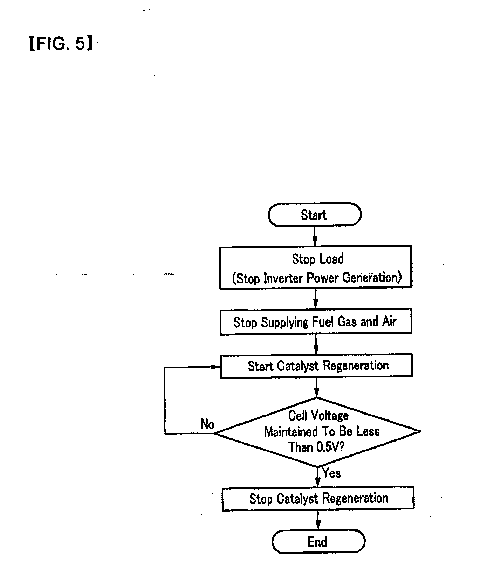

FIG. 5 is a flowchart illustrating a catalyst regeneration method when the fuel cell stack of FIG. 1 is not generating electricity.

As shown in FIG. 5, when the fuel cell stack stops generating electricity, a load, such as an inverter operating by the power generated by the unit cells, is stopped. Then, as the load is removed, the fuel cell stack maintains an idle state. Next, the supply of the fuel gas and air to the fuel cell stack is stopped and the unit cells are controlled to go through catalyst regeneration by the catalyst regeneration circuit. After the above, a cell voltage of each of the unit cells is detected. Next, when the cell voltage detected is maintained to be equal to or less than the preset constant voltage of 0.5V, the sustain time of about 10 seconds is maintained, after which the catalyst regeneration control is stopped. When the cell voltage detected is greater than the preset constant voltage of 0.5V, the catalyst regeneration is continuously repeated. Finally, the reforming reaction and the purge operation in the fuel cell stack are performed to stop the power generation of a fuel cell system.

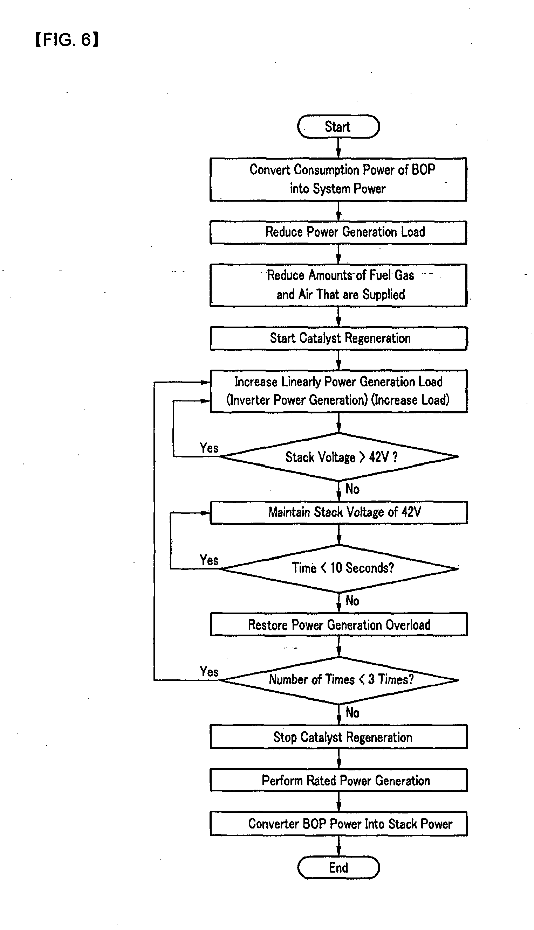

FIG. 6 is a flowchart illustrating a catalyst regeneration method when the fuel cell stack of FIG. 1 is generating electricity.

As shown in FIG. 6, since the catalyst regeneration is performed during when the fuel cell stack is generating electricity, unlike the operation of FIG. 5, the catalyst regeneration is performed in a state where a rated power generation is reduced by 30% considering a maximum power generation amount that can be handled by the fuel cell stack. The control power of a variety of balance of plants (BOPs) may be shut-down as the voltage of the fuel cell stack is suddenly lowered during the catalyst regeneration operation. Therefore, in the present exemplary embodiment, an AC/DC converter is used to convert consumption power supplied to the BOPs into system power.

According to the catalyst regeneration method, consumption power of a power generation load operating by the power of the stack is first converted into system power to reduce the power generation load of the unit cells by about 30%. In this state, amounts of the fuel gas and air that are supplied to the unit cells are reduced by 30% and the catalyst regeneration of the unit cells is performed in response to signals from the catalyst regeneration circuit.

Next, the power generation load increases linearly, in the course of which the reaction gas utilizing rate in the unit cells increases. After the above, a stack voltage is detected and increased to be equal to or greater than a predetermined value (42V). This increased stack voltage is maintained for a predetermined time (10-20 seconds) to recover the power generation overload. The above catalyst regeneration operation may be repeated a predetermined number of times (e.g., three times).

Next, the catalyst regeneration control is stopped and the consumption power of the power generation load is converted from system power into stack power.

In another embodiment, the catalyst regeneration operation may be performed after only one of the amounts of the reaction gases of the fuel electrode (anode) and the air electrode (cathode) is reduced by 30%. Then, the reaction gas utilizing rate of only one of the electrodes increases. As described above, the catalyst regeneration operation may be performed by alternately increasing the reaction gas utilizing rates of the fuel electrode and air electrode alternately, rather than simultaneously increasing the reaction gas utilizing rates. At this point, the reaction gas utilizing rate of the fuel electrode may be within a range of 85-95% and the reaction gas utilizing rate of the air electrode may be within a range of 65-75%.

As described above, according to the present exemplary embodiment, since the catalyst regeneration operation can be stably performed even when power is being generated, the catalyst performance of the fuel cell stack can be more stably maintained and the endurance of the fuel cell stack can be improved.

As described above, when the fuel cell stack is deteriorated in power generation efficiency and endurance as the unit cells of the fuel cell stack operate for a long period, the performance of the fuel cell stack can be restored by performing the catalyst regeneration operation.

In addition, according to the present invention, since the contact of the voltage detecting pin with the corresponding unit cell can be reliably realized, the voltages of the unit cells can be more accurately detected without being affected by external conditions such as humidity generated during the electrochemical reaction, an ambient temperature, and an external impact.

**Claims**

1. A fuel cell stack comprising:

   a plurality of unit cells that are interconnected in series and generate a current through an electrochemical reaction;
   end plates disposed on respective outer surfaces of outermost unit cells among the unit cells;
   a plurality of voltage detecting pins that contact respective unit cells to detect voltages of the respective unit cells; and
   a cell voltage monitoring board that is connected to the unit cells to induce catalyst regeneration by controlling a load and a voltage of each unit cell in accordance with a voltage output from the corresponding unit cell,
   wherein the cell voltage monitoring board includes a voltage detecting circuit that is connected to the unit cells by the voltage detecting pins, and
   wherein the voltage detecting circuit includes two resistors that are interconnected in series between a pair of unit cells, and reference shunt regulators that are connected to the resistors in parallel and selectively conduct electricity in accordance with a voltage value between them.

2. The fuel cell stack of claim 1, further comprising a fixing frame that is disposed in a longitudinal direction in which the unit cells are arranged and is fixed to the end plates, wherein the voltage detecting pins are supported on the fixing frame.

3. The fuel cell stack of claim 2, wherein each of the voltage detecting pins includes a spring that is disposed in the voltage detecting pin and provides an elastic force in a longitudinal direction of the voltage detecting pin, and an end tip that is biased by the spring to contact the unit cell, and wherein
   the end tip is provided with a plurality of pointed probes contacting the unit cell.

4. The fuel cell stack of claim 1, wherein the voltage detecting circuit further includes a photo coupler that is connected together with the reference shunt regulators between the resistors to transmit a signal by detecting if the reference shunt regulators conduct electricity.

5. The fuel cell stack of claim 4, wherein the cell voltage monitoring board further includes a catalyst regeneration circuit that performs catalyst regeneration of the unit cells of a power unit, which is a minimum unit for generating electric power and is formed by a group of four adjacent unit cells, by selectively cutting off flow of a current generated in the power unit, and wherein
   the catalyst regeneration circuit includes two resistors that are interconnected in series between the power units, reference shunt regulators that are connected to the resistors R in parallel and selectively conduct electricity in accordance with a voltage value between them, and a transistor to which a load resistor is connected in parallel and which selectively cuts off the current flowing toward the load resistor.

**6.** The fuel cell stack of claim 5, wherein the catalytic regeneration circuit further includes a photo coupler that is connected together with the reference shunt regulators between the resistors to transmit a signal to an external side.

**7.** A catalyst regeneration method of the fuel cell stack claimed in claim 6, comprising:

stopping operation of a load operating by electric power generated by the unit cells;
stopping supply of fuel gas and air to the unit cells;
performing catalyst regeneration of the unit cells using the catalyst regeneration circuit;
detecting a voltage of each of the unit cells; and
stopping the catalyst regeneration when the detected cell voltage is equal to or less than a preset voltage value or continuing the catalyst regeneration when the detected cell voltage is greater than a preset voltage value.

**8.** A catalyst regeneration method of the fuel cell stack claimed in claim 6, comprising:

converting consumption power of a power generation load operating by stack power generated from the unit cells into system power to reduce the power generation load of the unit cells;
reducing amounts of fuel gas and air that are supplied to the unit cells performing catalyst regeneration of the unit cells using the catalyst regeneration circuit;
recovering a power generation overload by linearly increasing the power generation load until the stack voltage measured from the unit cells is maintained to be equal to or higher than a preset value; and
converting the consumption power of the power generation load from system power to stack power after stopping the catalyst regeneration.

**9.** The method of claim 8, wherein converting the consumption power of the power generation load from system power to stack power is repeated a predetermined number of times.

**Patentansprüche**

**1.** Brennstoffzellenstapel, welcher aufweist:

mehrere Einheitszellen, die in Reihe miteinander verbunden sind und einen Strom durch eine elektrochemische Reaktion erzeugen;
Endplatten, die sich auf jeweiligen äußeren Oberflächen von äußersten Einheitszellen der Einheitszellen befinden;
mehrere Spannungserfassungsstifte, die jeweilige Einheitszellen kontaktieren, um Spannungen der jeweiligen Einheitszellen zu erfassen; und
eine Zellenspannungsüberwachungs-Baugruppe, die mit den Einheitszellen verbunden ist, um eine Katalysatorregenerierung zu induzieren durch Steuern einer Last und einer Spannung jeder Einheitszelle gemäß einer Ausgangsspannung von der entsprechenden Einheitszellen,
wobei die Zellenspannungsüberwachungs-Baugruppe eine Spannungserfassungsschaltung enthält, die durch die Spannungserfassungsstifte mit den Einheitszellen verbunden ist, und
wobei die Spannungserfassungsschaltung zwei Widerstände, die zwischen einem Paar von Einheitszellen in Reihe miteinander verbunden sind, und Bezugsnebenschlussregler, die parallel zu den Widerständen geschaltet sind und selektiv Elektrizität gemäß einem Spannungswert zwischen ihnen leiten, enthält.

**2.** Brennstoffzellenstapel nach Anspruch 1, weiterhin aufweisend einen Befestigungsrahmen, der in einer Längsrichtung angeordnet ist, in der die Einheitszellen angeordnet sind, und an den Endplatten befestigt ist, wobei die Spannungserfassungsstifte auf dem Befestigungsrahmen gehalten sind.

**3.** Brennstoffzellenstapel nach Anspruch 2, bei dem jeder der Spannungserfassungsstifte eine Feder, die sich in dem Spannungserfassungsstift befindet und eine elastische Kraft in einer Längsrichtung des Spannungserfassungsstifts vorsieht, und eine Endspitze, die durch die Feder vorgespannt ist, um die Einheitszelle zu kontaktieren, enthält, und wobei
die Endspitze mit mehreren spitzen Sonden versehen ist, die die Einheitszelle kontaktieren.

**4.** Brennstoffzellenstapel nach Anspruch 1, bei dem die Spannungserfassungsschaltung weiterhin einen Fotokoppler, der zusammen mit den Bezugsnebenschlussreglern zwischen die Widerstände geschaltet ist, um ein Signal durch Erfassen, ob die Bezugsnebenschlussregler Elektrizität leiten, zu übertragen.

**5.** Brennstoffzellenstapel nach Anspruch 4, bei dem die Zellenspannungsüberwachungs-Baugruppe weiterhin eine Kataiysatorregenerierungsschaltung enthält, die eine Katalysatorregenerierung der Einheitszellen einer Energieeinheit durchführt, die eine minimale Einheit zum Erzeugen elektrischer Energie ist und durch eine Gruppe von vier benachbarten Einheitszellen gebildet ist, durch selektives Abschalten eines in der Energieeinheit erzeugten Stroms, und wobei die Katalysatorregenerierungsschaltung zwei Widerstände, die zwischen den Energieeinheiten in Reihe miteinander verbunden sind, Bezugsnebenschlussregler, die parallel zu den Widerständen R geschaltet sind und selektiv Elektrizität gemäß einem Spannungswert zwischen ihnen leiten, und einen Transistor, zu dem ein Lasttransistor parallel geschaltet ist und der selektiv den zu dem Lasttransistor fließenden Strom abschaltet, enthält.

**6.** Brennstoffzellenstapel nach Anspruch 5, bei dem die Katalysatorregenerierungsschaltung weiterhin einen Fotokoppler enthält, der zusammen mit den Bezugsnebenschlussreglern zwischen die Widerstände geschaltet ist, um ein Signal zu einer externen Seite zu übertragen.

**7.** Katalysatorregenerierungsverfahren des Brennstoffzellenstapels nach Anspruch 6, welches aufweist:

Anhalten der Operation einer Last, die durch von den Einheitszellen erzeugte Energie betrieben wird;
Anhalten der Zuführung von Brennstoffgas und Luft zu den Einheitszellen;
Durchführen einer Katalysatorregenerierung der Einheitszellen unter Verwendung der Katalysatorregenerierungsschaltung;
Erfassen einer Spannung von jeder der Einheitszellen; und
Anhalten der Katalysatorregenerierung, wenn die erfasste Zellenspannung gleich einem oder kleiner als ein voreingestellter Spannungswert ist, oder Fortsetzen der Katalysatorregenerierung, wenn die erfasste Zellenspannung größer als ein voreingestellter Spannungswert ist.

**8.** Katalysatorregenerierungsverfahren des Brennstoffzellenstapels nach Anspruch 6, welches aufweist:

Umwandeln der Verbrauchsenergie einer Energieerzeugungslast, die durch von den Einheitszellen erzeugte Stapelenergie betrieben wird, in Systemenergie, um die Energieerzeugungslast der Einheitszellen zu verringern;
Verringern der jeweiligen Menge von Brennstoffgas und Luft, die zu den Einheitszellen geliefert werden;
Durchführen der Katalysatorregenerierung der Einheitszellen unter Verwendung der Katalysatorregenerierungsschaltung;
Wiedergewinnen einer Energieerzeugungs-Überlast durch lineares Erhöhen der Energieerzeugungslast, bis die von den Einheitszellen gemessene Stapelspannung aufrechterhalten wird, um gleich einem oder höher als ein voreingestellter Wert zu sein; und
Umwandeln der Verbrauchsenergie der Energieerzeugungslast von Systemenergie in Stapelenergie, nachdem die Katalysatorregenerierung angehalten ist.

**9.** Verfahren nach Anspruch 8, bei dem das Umwandeln der Verbrauchsenergie der Energieerzeugungslast von Systemenergie in Stapelenergie eine vorbestimmte Anzahl von Malen wiederholt wird.

**Revendications**

**1.** Empilage de piles à combustible comprenant :

une pluralité de piles unitaires qui sont interconnectées en série et qui génèrent un courant par une réaction électrochimique ;
des plaques d'extrémité disposées sur les surfaces extérieures respectives des piles unitaires les plus à l'extérieur parmi les piles unitaires ;
une pluralité de broches de détection de tension qui sont en contact avec des piles unitaires respectives pour détecter les tensions des piles unitaires respectives ; et
une carte de surveillance de tension de pile qui est connectée aux piles unitaires pour induire une régénération de catalyseur en commandant une charge et une tension de chaque pile unitaire en fonction d'une tension délivrée par la pile unitaire correspondante,
dans lequel la carte de surveillance de tension de pile comprend un circuit de détection de tension qui est connecté aux piles unitaires par les broches de détection de tension, et

dans lequel le circuit de détection de tension comprend deux résistances qui sont interconnectées en série entre une paire de piles unitaires, et des régulateurs shunts de référence qui sont connectés aux résistances en parallèle et qui conduisent de manière sélective l'électricité en fonction d'une valeur de tension entre eux.

2. Empilage de piles à combustible selon la revendication 1, comprenant en outre un cadre de fixation qui est disposé dans une direction longitudinale dans laquelle les piles unitaires sont agencées et qui est fixé aux plaques d'extrémité, dans lequel les broches de détection de tension sont supportées sur le cadre de fixation.

3. Empilage de piles à combustible selon la revendication 2, dans lequel chacune des broches de détection de tension comprend un ressort, qui est disposé dans la broche de détection de tension et qui fournit une force élastique dans une direction longitudinale de la broche de détection de tension, et une extrémité terminale qui est sollicitée par le ressort pour venir en contact avec la pile unitaire, et dans lequel l'extrémité terminale est pourvue d'une pluralité de sondes pointues venant en contact avec la pile unitaire.

4. Empilage de piles à combustible selon la revendication 1, dans lequel le circuit de détection de tension comprend en outre un photocoupleur qui est connecté aux régulateurs shunts de référence entre les résistances pour transmettre un signal en détectant si les régulateurs shunts de référence conduisent l'électricité.

5. Empilage de piles à combustible selon la revendication 4, dans lequel la carte de surveillance de tension de pile comprend en outre un circuit de régénération de catalyseur qui effectue une régénération de catalyseur des piles unitaires d'une unité de puissance, qui est une unité minimum pour générer une puissance électrique et qui est formée par un groupe de quatre piles unitaires adjacentes, en coupant de manière sélective la circulation d'un courant généré dans l'unité de puissance, et dans lequel le circuit de régénération de catalyseur comprend deux résistances qui sont interconnectées en série entre les unités de puissance, des régulateurs shunts de référence qui sont connectés aux résistances R en parallèle et qui conduisent de manière sélective l'électricité en fonction d'une valeur de tension entre eux, et un transistor auquel une résistance de charge est connectée en parallèle et qui coupe de manière sélective le courant circulant vers la résistance de charge.

6. Empilage de piles à combustible selon la revendication 5, dans lequel le circuit de régénération catalytique comprend en outre un photocoupleur qui est connecté avec les régulateurs shunts de référence entre les résistances pour transmettre un signal à un côté externe.

7. Procédé de régénération de catalyseur de l'empilage de piles à combustible selon la revendication 6, comprenant :

l'arrêt du fonctionnement d'une charge fonctionnant grâce à la puissance électrique générée par les piles unitaires ;
l'arrêt de l'alimentation en combustible gazeux et en air des piles unitaires ;
l'exécution d'une régénération de catalyseur des piles unitaires en utilisant le circuit de régénération de catalyseur ;
la détection d'une tension de chacune des piles unitaires ; et
l'arrêt de la régénération de catalyseur lorsque la tension de pile détectée est inférieure ou égale à une valeur de tension prédéterminée ou la poursuite de la régénération de catalyseur lorsque la tension de pile détectée est supérieure à une valeur de tension prédéterminée.

8. Procédé de régénération de catalyseur de l'empilage de piles à combustible selon la revendication 6, comprenant :

la conversion de la puissance consommée d'une charge de génération de puissance fonctionnant grâce à la puissance de l'empilage générée par les piles unitaires en une puissance de système pour réduire la charge de génération de puissance des piles unitaires ;
la réduction des quantités de combustible gazeux et d'air qui sont délivrées aux piles unitaires ;
l'exécution d'une régénération de catalyseur des piles unitaires en utilisant le circuit de régénération de catalyseur ;
la récupération d'une surcharge de génération de puissance en augmentant linéairement la charge de génération de puissance jusqu'à ce que la tension de pile mesurée des piles unitaires soit maintenue à une valeur supérieure ou égale à une valeur prédéterminée ; et
la conversion de la puissance consommée de la charge de génération de puissance d'une puissance de système en une puissance de pile après l'arrêt de la régénération de catalyseur.

9. Procédé selon la revendication 8, dans lequel la conversion de la puissance consommée de la charge de génération de puissance d'une puissance de système en une puissance de pile est répétée un nombre prédéterminé de fois.

【FIG. 1】

【FIG. 2】

【FIG. 3】

【FIG. 4】

TP n  
nth cell [(0.5V X n)V ~(0.95V X n)V]

TP n-1  
n-1th cell[(0.5V X n-1)V ~(0.95V X n-1)V]

TP 5  
5th cell(2.5V~4.75V)

TP 4  
4th cell(2V~3.8V)

TP 3  
3th cell(1.5V~2.85V)

TP 2  
2th cell(1V~1.9V)

TP 1  
1th cell(0.5V~0.95V)

TP  
0th cell(0V)

TRn

Rn

Rn

(Load Resistor)  
Rn

PCn

TR1

R3

PC1

R1

R2

IC1

R4  
(Load Resistor)

Catalyst Regeneration

Ground

[FIG. 5]

```
                    ( Start )
                        |
         ┌──────────────────────────────────┐
         │          Stop Load               │
         │ (Stop Inverter Power Generation)  │
         └──────────────────────────────────┘
                        |
         ┌──────────────────────────────────┐
         │   Stop Supplying Fuel Gas and Air │
         └──────────────────────────────────┘
                        |
         ┌──────────────────────────────────┐
    ┌───▶│    Start Catalyst Regeneration   │
    │    └──────────────────────────────────┘
    │                   |
    │              ╱ Cell Voltage ╲
    │    No      ╱ Maintained To Be Less ╲
    └──────────◀  Than 0.5V?              ╲
               ╲                         ╱
                 ╲                     ╱
                        | Yes
         ┌──────────────────────────────────┐
         │    Stop Catalyst Regeneration    │
         └──────────────────────────────────┘
                        |
                    ( End )
```

【FIG. 6】

```
                    ( Start )
                        │
                        ▼
          ┌─────────────────────────────┐
          │  Convert Consumption Power   │
          │  of BOP into System Power    │
          └─────────────────────────────┘
                        │
                        ▼
          ┌─────────────────────────────┐
          │  Reduce Power Generation Load│
          └─────────────────────────────┘
                        │
                        ▼
          ┌─────────────────────────────┐
          │  Reduce Amounts of Fuel Gas  │
          │  and Air That are Supplied   │
          └─────────────────────────────┘
                        │
                        ▼
          ┌─────────────────────────────┐
          │  Start Catalyst Regeneration │
          └─────────────────────────────┘
                        │
        ┌──────────────▶▼
        │ ┌────────────▶┌─────────────────────────────┐
        │ │             │ Increase Linearly Power      │
        │ │             │ Generation Load              │
        │ │             │ (Inverter Power Generation)  │
        │ │             │ (Increase Load)              │
        │ │             └─────────────────────────────┘
        │ │                         │
        │ │  Yes                    ▼
        │ └─────────◁  Stack Voltage > 42V ?  ▷
        │                           │ No
        │                           ▼
        │   ┌──────────▶┌─────────────────────────────┐
        │   │           │  Maintain Stack Voltage of 42V│
        │   │           └─────────────────────────────┘
        │   │                       │
        │   │  Yes                  ▼
        │   └─────────◁  Time < 10 Seconds?  ▷
        │                           │ No
        │                           ▼
        │           ┌─────────────────────────────┐
        │           │ Restore Power Generation     │
        │           │ Overload                     │
        │           └─────────────────────────────┘
        │                           │
        │  Yes                      ▼
        └──────────◁  Number of Times < 3 Times?  ▷
                                    │ No
                                    ▼
                    ┌─────────────────────────────┐
                    │  Stop Catalyst Regeneration  │
                    └─────────────────────────────┘
                                    │
                                    ▼
                    ┌─────────────────────────────┐
                    │  Perform Rated Power Generation│
                    └─────────────────────────────┘
                                    │
                                    ▼
                    ┌─────────────────────────────┐
                    │ Converter BOP Power Into     │
                    │ Stack Power                  │
                    └─────────────────────────────┘
                                    │
                                    ▼
                                ( End )
```